# EUROPEAN PATENT APPLICATION

(11) **EP 3 437 491 A1**
(43) Date of publication of application: **06.02.2019**
(21) Application number: 17020333.5
(22) Date of filing: 04.08.2017
(51) Int. Cl.: A23N 1/02, B30B 9/20

(54) **CYLINDERS BASED OLIVE OIL EXTRACTOR AND ENDLESS SCREW BASED OLIVE OIL MILL**

(71) Applicant: Cerasani, Ennio, 06800 Cagnes-sur-Mer (FR)
(72) Inventor: Cerasani, Luca, 06800 Cagnes-SUR-MER (FR); Cerasani, Dominique, 83440 FAYENCE (FR)

(57) **Abstract**

Two main procedures are used today for the cold extraction of virgin Olive Oil: The oldest method uses potent presses and fiber disks that need to be meticulously cleaned and the automated method requires water that modify organoleptic properties of Olive oil and requires costly equipment.

Two new procedures are presented that allow cold and mechanical extraction of oil from olives:
- The first procedure is used to extract liquids from olive paste. the Cylinders based Olive Oil Extractor (CbOOE) uses two cylinders tighten together to compress olive dough.
- The second procedure based on an endless screw (Endless Screw Olive Oil Mill (ESbOOM)) allows the extraction of oil directly from olives. Olives are grinded, then malaxed before being pressed using a conic endless screw.

Both methods require a next step to separate oil from water either using vertical centrifugation or by decantation.

Organoleptic properties of Olive oil are preserved considering that:
- Fiber disks are not needed, all parts in contact with olive dough are in stainless steel
- Addition of water is not required
- There is no risk of warming up the olive dough (slow rotating parts)
- Pressure on the olive dough can be very high to get most of the beneficial molecules

## Description

### 1- History

Two main procedures are used today for the cold extraction of the virgin Olive Oil:
- The oldest method uses potent presses that compress a stack of fiber disks supporting the olive paste. Apart it cannot be automated, fiber disks need to be clean up meticulously to avoid alteration of the olive oil.
- The automated method uses a decanter by centrifugation to separate oil from other components of the olive (water and pomace). Two of its major drawbacks is the need to add water (risk of alteration of the olive oil and reduced antioxidants) and its cost.

### 2- Presentation

This invention presents two new procedures to allow cold and mechanical extraction of oil from olives:
- The first procedure is used to extract liquids from olive paste previously obtained by any crushing or pounding machine or millstones and then malaxed. A Cylinders based Olive Oil Extractor (CbOOE) is a device compressing the olive dough to extract the liquid part and replaces either olive presses or partly the decanter by centrifugation. Then, separation of Oil from water can be done by vertical centrifugation or by decantation.
- The second procedure based on an endless screw is used to extract liquids from Olives directly. This procedure is already used by Juice extractors but it has been adapted to be applied to Olives and eliminates the need to warm the olive paste. The Endless Screw Olive Oil Mill (ESbOOM) based on this new process implements most of the steps required to extract olive oil from olives except the separation of oil from water that can be done by vertical centrifugation or by decantation.

### 3- Description

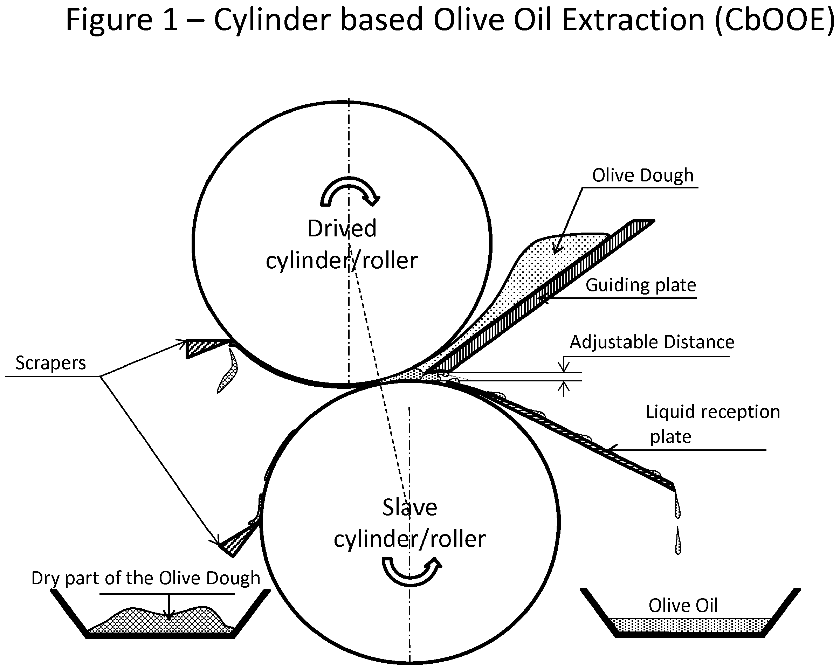

Figure 1a presents a Cylinder based Olive Oil Extractor (CbOOE):
   - Two cylinders are rotating in opposite directions while only one of them is drived. They are inclined and pressed together with forces in the order of magnitude of thousands of Newtons.
   - Olive paste is drived in between the two cylinders using the guiding plate.
   - When the olive paste is pressed liquids (oil and water) will flow on the space between the guide plate and the liquids reception plate. Most of the liquid will be collected by the reception plate considering the space between the liquid reception plate and the slave cylinder is very small (in the order of magnitude of 0.1 mm).
   - Scrapers are used to clean up the cylinders from dried pomace.

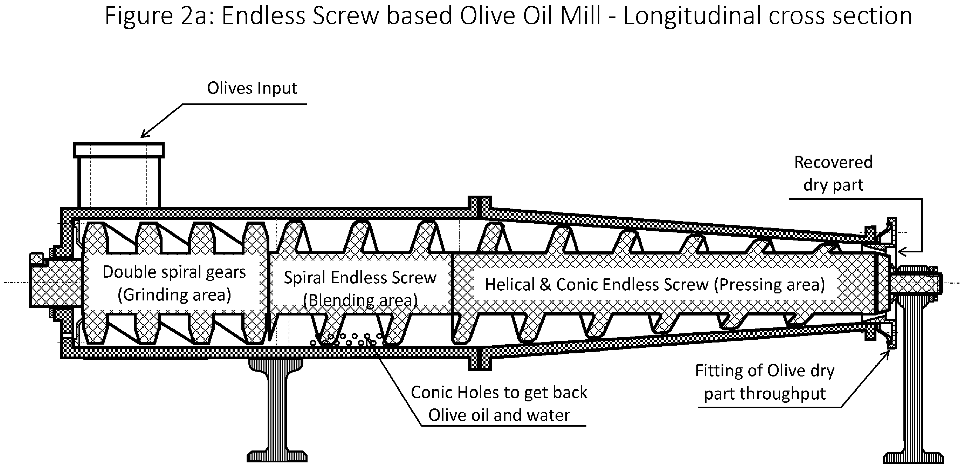

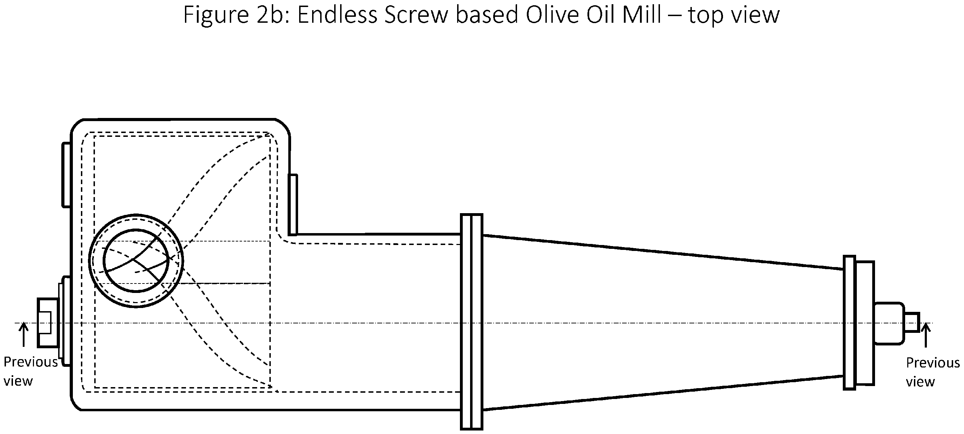

Figure 2a and 2b present an Endless Screw based Olive Oil Mill (ESbOOM):
   - The Endless screw can be split into three parts:
      ∘ The crushing part that will generate the olive paste using two intertwined spiral gears
      ∘ The malaxing part implemented by an cylindrical endless screw that will allow the agglutination of oil micro droplets and enzymes actions. No compression on the olive dough is applied in this step.
      ∘ The pressing part is realized by a conic endless screw that will separate the liquids (oil and water) from dried pomace
   - Liquids from the compression area will flow back to the malaxing area using the space between the screw and enclosing tube.
   - An adjustment screw at the end of the enclosing tube is used to set the desired pressure and then the throughput.

## Claims

1. This new methodology for extraction of Olive Oil based on Cylinders allows the separation of liquids (oil and water) from olive paste without requiring the use of potent presses, fiber plates and additional water. It preserves the organoleptic properties of extra virgin olive oil and can be easily automated i.e. simple enough and not requiring precise adjustments or involving strong mechanical constraints.
This second methodology for an Olive Oil Mill based on Endless Screw allows the separation of liquids (oil and water) directly from olives without requiring the warming of the olive paste. It presents also the same advantages as the previous methodology.
